# DEMANDE DE BREVET EUROPEEN

(11) **EP 2 149 823 A1**
(43) Date de publication de la demande: **03.02.2010**
(21) Numéro de dépôt: 09290600.7
(22) Date de dépôt: 30.07.2009
(51) Int. Cl.: G05B 15/02, G05B 23/02

(54) **Système aéronautique embarqué à reconfiguration dynamique, procédé associé et aéronef embarquant un tel système**

(30) Priorité: 30.07.2008 FR 0855261
(71) Demandeur: AIRBUS OPERATIONS, 31060 Toulouse (FR)
(72) Inventeur: Genissel Jean-Paul, 31820 PIBRAC (FR)
(74) Mandataire: Le Tourneau, Augustin

(57) **Abrégé**

La présente invention se rapporte à un système aéronautique embarqué destiné à être reconfiguré dynamiquement, notamment un système d'information embarqué, et un procédé associé ainsi qu'un aéronef comprenant un tel système.

Notamment le système comprend une pluralité d'équipements hétérogènes (102, 104), une partie au moins desdits équipements étant reconfigurable, et comprend un centre de gestion de reconfiguration (20) agencé pour recevoir (616) des messages d'état de ladite pluralité d'équipements et pour émettre (638) des messages de reconfiguration à destination desdits équipements reconfigurables (104) en fonction au moins desdits messages reçus,
- lesdits messages d'état étant émis, selon un même format, par des moyens de surveillance (108, 110) embarqués dans chacun desdits équipements (102, 104),
- les équipements reconfigurables (104) embarquant des moyens de reconfiguration (122) aptes à traiter au moins un desdits messages de reconfiguration pour reconfigurer ledit équipement associé.

## Description

L'invention concerne un système aéronautique embarqué destiné à être reconfiguré dynamiquement, notamment un système d'information embarqué, et un procédé associé ainsi qu'un aéronef comprenant un tel système.

Dans les systèmes aéronautiques, un grand nombre d'équipements de traitement est utile au fonctionnement de l'aéronef et doit être adapté aux conditions environnantes parfois évolutives. On peut notamment nommer l'allocation dynamique de ressources de traitement telles les mémoires, les processeurs centraux, les capacités de réseau, la distribution de puissance, ou encore la reconfiguration d'équipement en cas de défaillance, généralement matérielle (*hardware*) mais également envisagée pour les parties logicielles (*software*).

On fait alors généralement appel à la reconfiguration d'équipement. Cette dernière est l'opération par laquelle un équipement passe d'une configuration définie par des caractéristiques fonctionnelles et/ou physiques à une autre configuration définie par un autre jeu de caractéristiques. Une telle reconfiguration est dite dynamique lorsque ce changement de configuration est opéré et effectif alors même que l'équipement est maintenu en marche. Généralement, la reconfiguration dynamique est conduite en reconfigurant le système partie par partie de sorte à s'assurer, à chaque instant, qu'il subsiste toujours une partie opérationnelle assurant le bon fonctionnement du système en cours de reconfiguration.

A l'opposé, la reconfiguration statique requiert le redémarrage de l'équipement reconfiguré pour prendre en compte une nouvelle configuration.

De par la souplesse d'utilisation résultante de l'équipement en question, la reconfiguration dynamique apporte de nombreux avantages aux systèmes numériques notamment celui de s'adapter rapidement à de nouvelles fonctionnalités, aux changements de son environnement et de ses conditions d'utilisation, ou celui de supporter de multiples normes, l'équipement restant opérationnel à tout moment.

On pratique déjà, dans le domaine aéronautique, des reconfigurations dynamiques de systèmes embarqués. En particulier, dans le domaine de l'aviation militaire, l'architecture système nommée ASAAC ("*Allied Standards Avionics Architecture Council*") propose une reconfiguration dynamique des logiciels d'équipements modulaires qui vise à pallier une défaillance d'un module, à suivre des profiles de missions ou encore à se conformer à des règles de sécurité.

Toujours dans le domaine aéronautique, le document US 6,389,335 décrit, quant à lui, un système classique mettant en oeuvre une reconfiguration dynamique. Un signal de mesure d'un équipement surveillé et issu d'un capteur est ici comparé à un signal attendu de sorte à déterminer une éventuelle défaillance du capteur. En fonction du degré de cette dernière, le programme de contrôle de vol est modifié afin que les actuateurs de contrôle de vol soient actionnés, tout en ignorant la défaillance détectée.

De tels mécanismes de reconfiguration dynamique sont particuliers à un équipement ou une fonction spécifique surveillé(e).

Or dans l'aéronautique, la complexité croissante des traitements réalisés conduit à désormais privilégier les systèmes distribués au détriment des systèmes centralisés, afin d'apporter tolérance aux pannes, performance et scalabilité (évolutivité).

De par sa définition, un système distribué est formé d'équipements ou composants hétérogènes. On entend ici par "éléments hétérogènes" des éléments de natures différentes, communiquant notamment, par nature, selon des protocoles ou formats distincts (en ce qui concerne les commandes de pilotage de ces éléments et les messages émis par ces éléments).

Il en résulte une difficulté dans le cadre d'une gestion de reconfiguration globalisée, où des informations en provenance des différents équipements sont prises en compte pour agir sur l'un d'eux spécifiquement. En effet, chaque équipement étant généralement différent de son voisin, la gestion de leur reconfiguration doit s'adapter aux spécificités de chacun d'entre eux.

Bien que les solutions connues de l'art antérieur prévues pour la gestion d'une reconfiguration dynamique puissent être envisagées individuellement pour chacun des équipements hétérogènes, seule une gestion indépendante équipement par équipement serait réalisable.

La présente invention vise à pallier ces inconvénients des solutions connues en proposant une gestion globalisée de la reconfiguration dynamique de systèmes hétérogènes embarqués dans un aéronef.

Dans ce dessein, l'invention vise notamment un système aéronautique embarqué comprenant une pluralité d'équipements hétérogènes communiquant selon des protocoles ou formats distincts et aptes à traiter des commandes pour le fonctionnement de l'aéronef, une partie au moins desdits équipements étant reconfigurable, le système comprenant un centre de gestion de reconfiguration agencé pour recevoir des messages d'état de ladite pluralité d'équipements et pour émettre des messages de reconfiguration à destination desdits équipements reconfigurables en fonction de plusieurs messages d'état reçus, système dans lequel :
- lesdits équipements hétérogènes embarquent des moyens de surveillance aptes à émettre lesdits messages d'état selon un même format, et
- les équipements reconfigurables embarquent des moyens de reconfiguration aptes à traiter au moins un desdits messages de reconfiguration de sorte à reconfigurer ledit équipement associé.

Dans le contexte de l'invention, les agents ou moyens de surveillance et de reconfiguration embarqués sur l'ensemble des équipements servent d'interface avec le centre de reconfiguration et, par l'utilisation d'un format commun, effacent l'hétérogénéité des équipements. Les équipements hétérogènes ainsi équipés sont notamment des composants sur étagère ou COTS ("*Components Off-The-Shelf*") de type logiciel ou matériel, c'est-à-dire non spécifiquement développés pour des applications précises, type aéronautiques. A titre d'exemple de COTS matériels: des unités centrales de traitement CPU, des mémoires, des blocs d'alimentation, etc.

Grâce à l'invention, au lieu de remplacer les équipements hétérogènes par des équipements homogènes, on garde les mêmes équipements hétérogènes déjà en place en leur rapportant des modules de surveillance/reconfiguration, afin d'apporter une fonctionnalité de reconfiguration dynamique globalisée au système. On observe donc que la fonction d'homogénéisation des équipements est ici déportée, au moins en partie, sur chacun des équipements hétérogènes par l'utilisation des moyens de surveillance/reconfiguration embarqués, alors que le système décisionnel relatif à la reconfiguration est opéré globalement par le centre de gestion.

De plus, le centre de reconfiguration selon l'invention dispose d'une vision globale de l'ensemble des équipements hétérogènes du système, et peut proposer par conséquent une reconfiguration efficace de ceux-ci en tenant compte de la globalité du système.

On s'affranchit ainsi de l'hétérogénéité et des contraintes de systèmes tels que ceux actuellement embarqués dans des aéronefs.

Selon une caractéristique de l'invention, le système comprend :
- un réseau de communication embarqué dans l'aéronef pour connecter le centre de gestion de reconfiguration, ladite pluralité d'équipements hétérogènes et d'autres systèmes embarqués dans l'aéronef,
- un réseau distinct dédié pour la reconfiguration véhiculant des messages d'état et lesdits messages de reconfiguration entre le centre de reconfiguration et ladite pluralité d'équipements hétérogènes.

Grâce à cette disposition, les données de reconfiguration, particulièrement sensibles au vu de l'impact qu'elles peuvent avoir sur l'ensemble de l'avion, sont isolées du réseau Ethernet ou de tout autre réseau classique embarqué de l'avion. L'utilisation d'un réseau dédié est donc un gage de sécurité pour l'avion.

Selon une réalisation de l'invention, lesdits réseau de communication et réseau dédié sont supportés par deux réseaux physiques distincts. Cette isolation physique est sûre mais parfois contraignante (déploiement physique, masse supplémentaire, etc.)

Ainsi, selon une variante, lesdits réseau de communication et réseau dédié sont deux réseaux virtuels supportés par un même réseau physique, par exemple des sous-réseaux ou des réseaux privés virtuels dits VPN. Des moyens logiques et/ou logiciels sont ainsi utilisés afin d'assurer la ségrégation mutuelle des données de reconfiguration véhiculées sur ledit réseau dédié et des données quelconques véhiculées sur l'autre réseau, type Ethernet par exemple.

Dans un mode de réalisation, ladite pluralité d'équipements hétérogènes est regroupée en une pluralité d'ensembles cohérents d'équipements, par exemple selon des fonctions ou modes de fonctionnement similaires, chaque ensemble cohérent comprenant un moyen concentrant l'ensemble des messages d'état émis par les équipements de l'ensemble cohérent et générant un message d'état général à destination dudit centre de reconfiguration.

Ces dispositions convergent vers un intérêt supplémentaire de la présente invention selon lequel une gestion groupée des équipements est obtenue afin d'assurer une reconfiguration efficace des fonctions similaires réalisées dans l'avion. En effet, plusieurs équipements peuvent contribuer ensemble à la réalisation d'une fonction spécifique et leur reconfiguration doit ainsi être cohérente.

Cette approche s'applique également aux équipements fonctionnant de façon identique (parallélisme de tâches par exemple).

Selon une caractéristique particulière de l'invention, chaque ensemble cohérent comprend un moyen de pilotage apte à traiter un message de reconfiguration émis par le centre de reconfiguration de sorte à piloter chacun desdits équipements reconfigurables de l'ensemble cohérent, au travers desdits moyens de reconfiguration embarqués.

Grâce à cette configuration, le traitement de la reconfiguration est réparti entre le centre de gestion, qui fournit une approche globale de la reconfiguration (par exemple une instruction générale de reconfiguration), et chaque ensemble cohérent qui gère individuellement l'instruction générale de reconfiguration haut niveau en des commandes de reconfiguration adaptées pour chacun des équipements sous son contrôle.

Cette approche permet en outre de décharger le centre de gestion d'une partie des traitements relatif à la reconfiguration.

De plus, grâce à ces dispositions, il est aisé de modifier ou remplacer une fonction (c'est-à-dire un ensemble cohérent) de l'avion sans impacter le centre de gestion.

Selon une autre caractéristique particulière de l'invention, ledit moyen de concentration émet, sur ledit réseau dédié, des messages relatifs à l'état d'activité desdits équipements de l'ensemble et, sur ledit réseau de communication embarqué, des messages relatifs à l'état de santé desdits mêmes équipements.

Cette configuration permet de conserver les architectures embarquées actuelles dans lesquelles un système de maintenance centrale connecté au réseau de communication classique est prévu. Ainsi, ce système de maintenance continue de recevoir des messages d'état de santé des équipements, via le réseau classique type Ethernet.

Dans un mode de réalisation de l'invention, ledit centre de reconfiguration est agencé pour traiter ensemble lesdits messages d'état et des messages émis par d'autres systèmes embarqués, tels un système de surveillance de vol, un système centralisé de maintenance, un terminal de maintenance embarqué et un système de configuration embarqué, de sorte à générer lesdits messages de reconfiguration. En particulier, le système centralisé de maintenance peut avoir reçu des messages d'état de la pluralité d'équipements et émettre un message récapitulatif desdits messages au centre de gestion.

Corrélativement, l'invention vise un procédé de reconfiguration d'un système aéronautique embarqué comprenant une pluralité d'équipements hétérogènes communiquant selon des protocoles ou formats distincts et aptes à traiter des commandes pour le fonctionnement de l'aéronef, une partie au moins desdits équipements étant reconfigurable,
le procédé comprenant les étapes suivantes :
- la réception, par un centre de gestion de reconfiguration, d'une pluralité de messages d'état de ladite pluralité d'équipements ;
- l'émission, par le même centre de gestion de reconfiguration, de messages de reconfiguration à destination desdits équipements reconfigurables en fonction de plusieurs messages d'état reçus,
et dans lequel lesdits messages d'état sont émis, selon un même format, par des moyens de surveillance embarqués dans chacun desdits équipements,
et les équipements reconfigurables embarquent chacun des moyens de reconfiguration aptes à traiter au moins un desdits messages de reconfiguration de sorte à reconfigurer ledit équipement associé.

De façon optionnelle, le système peut comprendre des moyens se rapportant aux caractéristiques du procédé d'initialisation ci-dessus.

Selon une caractéristique, des messages d'état d'activité des équipements et les messages de reconfiguration sont transmis sur un réseau dédié à la reconfiguration et des messages d'état de santé des équipements sont transmis sur un réseau de communication embarqué distinct de l'aéronef.

En particulier, ledit centre de reconfiguration collecte les messages reçus au travers des deux réseaux distincts, détermine l'impact desdits messages d'état sur l'état d'au moins un équipement reconfigurable et génère, le cas échéant, un desdits messages de reconfiguration à destination d'au moins ledit équipement reconfigurable, et plus généralement d'un moyen de pilotage d'un ensemble cohérent comme introduit précédemment.

Selon un mode de réalisation, la reconfiguration effective d'un équipement reconfigurable engendre la transmission, par ledit moyen de surveillance de l'équipement reconfiguré, d'au moins un message d'état au centre de gestion de reconfiguration de sorte que ce dernier mène une vérification de ladite reconfiguration.

L'invention vise également un aéronef comprenant un système tel que présenté ci-dessus.

De façon optionnelle, l'aéronef peut comprendre des moyens se rapportant aux caractéristiques de système présentées ci-dessus.

L'invention permet ainsi une grande souplesse d'utilisation des systèmes aéronautiques même en présence d'une forte hétérogénéité des équipements le constituant.

L'invention permet également, au-delà des équipements eux-mêmes reconfigurables, d'étendre le champ de surveillance aux équipements non reconfigurables qui peuvent jouer un rôle utile dans le comportement général des systèmes.

En outre, les architectures matérielles ou systèmes utilisé(e)s peuvent être simplifié(e)s puisque la reconfiguration dynamique selon l'invention permet de les adapter aux besoins quasi-instantanés.

D'autres particularités et avantages de l'invention apparaîtront encore dans la description ci-après, illustrée par les dessins ci-joints, dans lesquels :
- la **figure 1** est une représentation en blocs de haut niveau des éléments prenant part au processus de reconfiguration selon l'invention ;
- la **figure 2** est une représentation schématique en blocs des éléments détaillés constituant l'invention dans la vue haut niveau de la **figure 1** ;
- la **figure 3** représente, sous forme de logigramme, un exemple de procédure de reconfiguration classique pour un système selon l'invention ;
- la **figure 4** illustre, en lien avec la **figure 3**, les différentes étapes mises en oeuvre lors de la réalisation d'une reconfiguration selon l'invention ;

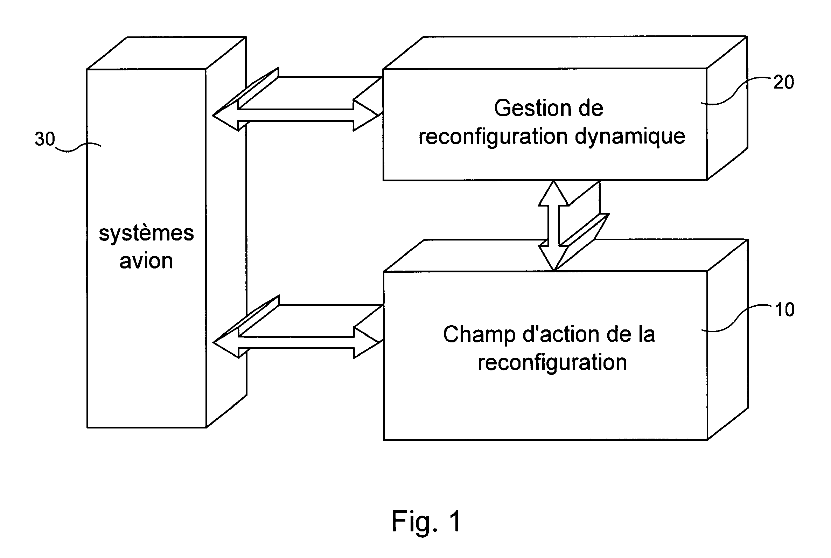

Un avion équipé du système selon l'invention comprend, comme illustré sur la **figure 1**, un ensemble 10 d'éléments ou équipements soumis à la fonction de reconfiguration selon l'invention et définissant un champ d'action pour la reconfiguration, un système ou centre de gestion de reconfiguration 20 pour l'ensemble 10, et d'autres systèmes avion 30.

Ces systèmes 30 peuvent être des systèmes de commande de vol, de communication, de navigation, de traitement de données, etc.

De façon générale, selon l'invention, le système de reconfiguration 20 agit sur un ensemble d'éléments 10. Ces éléments interagissent également avec les autres systèmes 30 avions soit par leur fonction propre, soit dans le cadre d'envoi d'informations de maintenance, par exemple. Le système de reconfiguration dynamique (20) interagit lui aussi avec les autres systèmes avion 30 afin d'informer l'avion de son état et de récolter des informations sur l'environnement dans lequel la fonction de reconfiguration évolue (par exemple des mises à jour).

Le système de reconfiguration 20 peut ainsi piloter les éléments à reconfigurer de l'ensemble 10 en fonction des informations reçues de ceux-ci et des autres systèmes avion 30.

A titre d'exemple, la reconfiguration peut porter sur l'allocation dynamique de ressources partagées telles qu'un microprocesseur, une mémoire vive, une mémoire de stockage, un réseau ou une distribution d'énergie d'un équipement de bord, en fonction de différentes contraintes.

Notamment, la bande passante d'un réseau peut être allouée en fonction des différentes phases de vol de l'avion. En effet, lorsque l'avion est au sol, il est courant d'effectuer de larges transferts de données (chargement de données, ou transmission de rapports de vol et données de mesures/de maintenance). Ainsi, on peut prévoir d'accroître, par un mécanisme de priorité, la bande passante associée à des équipements spécifiques lorsqu'un signal d'atterrissage est transmis au système de reconfiguration 20.

De même, on peut tenir compte de l'état de fonctionnement d'un équipement pour modifier l'allocation de ressources. En effet, lorsqu'une fonction ou un équipement devient partiellement ou totalement défaillant pour sa fonction, il est utile d'allouer les ressources propres à celui-ci à d'autres équipements/fonctions afin d'améliorer et d'optimiser les systèmes embarqués dans l'avion.

Egalement dans le domaine de l'allocation dynamique, on constate qu'aujourd'hui l'allocation de ressources (CPU, mémoire vive) est statique: chaque ressource est allouée à une application pour un temps donné. Ainsi, à un même moment, une ressource peut être saturée par de nombreuses applications alors qu'une autre ressource équivalente est peu chargée. Il peut donc être utile d'allouer, en fonction de la priorité des applications, la charge de travail de façon plutôt équitable entre les différentes ressources équivalentes.

D'autres types d'exemple concernent la reconfiguration pour cause de défaillance afin de suppléer la fonction/équipement défaillante.

Dans un exemple, cette reconfiguration repose sur un fond de panier intelligent (ou "*intelligent backplane*") qui gère une pluralité de cartes de traitement numérique. En mesurant l'état de chacune des cartes, il est possible d'allouer à une nouvelle carte non utilisée, la fonctionnalité qui serait perdue par la défaillance d'une autre carte. Cette affectation consiste, d'un point de vue informatique, à transférer les partitions, c'est-à-dire les applications et leurs configurations générales liées généralement à leurs environnements d'exécution, de la carte défaillante vers la nouvelle carte, et à re-router les données de communication vers la nouvelle carte. On pourrait ainsi transférer une fonctionnalité de terminal d'information (OIT pour "*on-board information terminal*") d'un terminal OIT défaillant vers un terminal OMT ("*on-board maintenance terminal*") présentant une architecture matérielle similaire.

Dans un autre exemple proche, on peut utiliser des équipements de secours reconfigurables en fonction de l'équipement défaillant, afin de limiter le nombre d'équipements de secours nécessaires dans l'avion et donc le poids embarqué dans celui-ci.

Dans un dernier exemple, on peut être amené à reconfigurer dynamiquement des tables de routage informatique (correspondance entre une adresse réseau et une adresse physique). En effet, en cas de défaillance d'un équipement, on cherche alors à réattribuer dynamiquement l'adresse réseau, utilisée par l'équipement défaillant, à un nouvel équipement réalisant la même fonction, sans impacter les autres équipements ou systèmes.

Grâce à l'invention, on tient compte des états de plusieurs équipements embarqués quel que soit leur nature, afin de piloter intelligemment la reconfiguration de certains de ces équipements comme dans les exemples déjà introduits et dans ceux qui suivent.

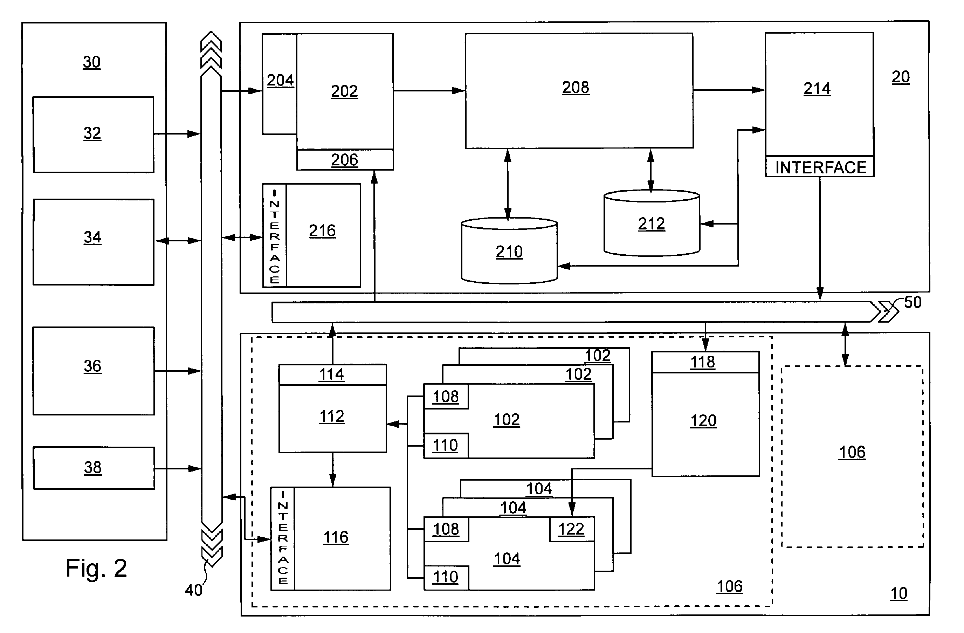

Plus en détail, sur la **figure 2**, on a représenté différents autres systèmes avions 30: un module de configuration avion 32, un module de surveillance pour la maintenance (CMS ou "*centralized maintenance system*") 34, un module de suivi de vol 36 et un terminal de maintenance à bord (OMT ou "*on-board maintenance termina*") 38. L'ensemble de ces modules et autres modules représentés sur la **figure 2** peut être mis en oeuvre au travers d'un logiciel ou d'un matériel adapté.

Le module de configuration avion 32 permet de mettre à jour différents systèmes dans l'avion et notamment le système de gestion de la reconfiguration 20, en particulier chacune des fonctions qui la composent pour, par exemple, des raisons d'évolutivité des systèmes.

L'intégration de nouveaux éléments dans le champ d'action 10 suivi pour la reconfiguration conduit également ce module de configuration 32 à redéfinir le champ d'action du système 20, par une reconfiguration de celui-ci afin que le système 20 prennent en compte le nouvel élément intégré. Elle conduit aussi à modifier les critères de décision de reconfiguration utilisés par ce système 20 pour également tenir compte du nouvel élément. Cette reconfiguration peut être effectuée, par exemple, par l'intermédiaire du système de téléchargement embarqué.

Le module de surveillance pour la maintenance CMS 34 collecte des informations sur l'état de santé des différents éléments du champ d'action 10 ainsi que sur le système de reconfiguration 20. Comme on le verra par la suite, différents modules de type "*Built-in Test Equipement*" ou BiTE surveillant les différents éléments et équipements des systèmes, par exemple via des tests menés sur requête du CMS 34, génèrent des signaux à destination du module de surveillance CMS 34.

En réponse, le module CMS 34 peut synthétiser des messages récapitulatifs sur l'état de santé des différents éléments à surveiller et transmettre un message correspondant au module de reconfiguration 20 pour qu'il en soit tenu compte dans les estimations et décisions de reconfiguration des éléments du champ d'action 10.

Le module de suivi de vol 36 reçoit des informations des systèmes de vol embarqués et fournit au système de reconfiguration dynamique 20 un état des phases de vol de l'avion et notamment les modifications de phases de vol. La reconfiguration dynamique peut ainsi tenir compte de ces phases de vol, par exemple en interdisant une reconfiguration pendant les phases de décollage ou d'approche et atterrissage.

Enfin, le terminal de maintenance de bord 38 transmet au système de reconfiguration 20 des commandes de la part d'intervenants de maintenance et concernant la fonction de reconfiguration, par exemple pour interdire une reconfiguration dynamique pendant une opération de test ou maintenance

Ces différents systèmes avion 30 sont connectés au réseau classique avion 40 de type Ethernet-AFDX ("*Avionics Full DupleX*"). Ce réseau informatique peut, par exemple, être celui supportant les systèmes de divertissement à bord ("*In-Flight Entertainment*" selon la terminologie anglosaxonne).

Toujours en référence à la **figure 2**, le champ d'action pour la reconfiguration 10 comprend plusieurs équipements 102, 104 que l'on surveille, équipements permettant de réaliser différentes fonctions pour le fonctionnement de l'avion: par exemple, fonction opérationnelles (management de le mission, aide au diagnostic) voire des fonctions plus avioniques telle que le pilotage d'éléments mécaniques comme les trains d'atterrissages ou volets, les traitements et calculs sur des données de vol ou de navigation, le calcul de performances au décollage, l'utilisation d'une carte météo, l'aide à la navigation au sol, etc.

Ces équipements 102, 104 sont soit des éléments logiciels, soit des éléments matériels.

Certains équipements 102 ne sont pas reconfigurables alors que d'autres 104 le sont, c'est-à-dire peuvent passer d'une configuration de fonctionnement à une autre, en modifiant par exemple certains paramètres de fonctionnement.

Les équipements 102, 104 sont globalement hétérogènes sur l'ensemble du champ d'action 10 et sont regroupés au sein de domaines 106. Chaque domaine forme un ensemble cohérent d'équipements 102 et 104 qui accomplissent ensemble une fonction particulière pour l'avion ou qui ont un fonctionnement identique. Par exemple, tous les équipements de navigation GPS sont regroupés dans un même domaine cohérent. On comprend ici que la reconfiguration doit être traitée de façon cohérente pour des équipements coopérant étroitement entre eux pour une réalisation commune ou de façon similaire pour des équipements identiques.

Les différents domaines 106 du champ d'action pour la reconfiguration 10 sont connectés à un réseau 50 dédié au transfert d'informations relatives à la reconfiguration et de commandes de reconfiguration. Ce réseau 50 est un réseau informatique du type VPN ("*virtual private network*") distinct logiquement du réseau avion 40, mais mis en oeuvre sur le même réseau physique. Il résulte alors une ségrégation importante entre les données véhiculées sur les deux réseaux de sorte à garantir un haut degré de sécurité des données/commandes relatives à la reconfiguration.

En variante, deux réseaux physiques distincts peuvent être utilisés.

Concernant la surveillance des domaines 106, chaque équipement 102, 104 du champ d'action 10 est muni de moyens de surveillance, ici des agents logiciels ou matériels agissant comme centralisateur des données d'état issues des capteurs dans les équipements qu'ils surveillent. Comme on le verra par la suite, ces agents jouent un rôle d'interfaçage entre les capteurs hétérogènes des différents équipements et les éléments avions/gestion de reconfiguration extérieurs à ces équipements (par exemple pour transmettre sur un bus de données standard type AFDX, via un protocole standard type ABD 100).

On prévoit un agent de surveillance de l'état de santé 108, dit agent santé, de l'équipement et un agent de surveillance de l'état d'activité 110, dit agent activité, du même équipement.

Les informations de santé sont relatives à l'intégrité du fonctionnement de l'équipement considéré, c'est-à-dire à son niveau de défaillance dans les traitements sollicités, alors que les informations d'activité sont relatives au niveau d'occupation des ressources de l'équipement pour l'accomplissement de tâches de traitement.

Ces agents forment un premier niveau d'interface entre la spécificité de l'équipement 102, 104 surveillé et la généricité du système haut niveau de gestion de la reconfiguration 20.

L'agent santé 108 collecte des informations de santé sur l'équipement 102, 104 surveillé, par exemple la capacité d'alimentation disponible représentant une information de granularité fine (propre à un élément) au regard de l'ensemble du système. Bien entendu, on définit des valeurs seuils à partir desquelles ces informations de santé sont critiques et entraînent l'émission de messages d'état. Des capteurs logiciels ou physiques et un microcontrôleur *ad hoc* sont fournis en conséquence. Il sélectionne les informations utiles, par exemple en fonction des valeurs mesurées et des valeurs seuils définies, et les met ensuite en forme dans un format commun au domaine 106 considéré, avant transmission à un concentrateur d'information 112. Ainsi, ces informations sont traduites ensuite en panne alimentation, par exemple, nécessaire à la prise de décision de reconfiguration.

De façon similaire, l'agent activité 110 collecte des informations de granularité fine sur l'activité de l'équipement, par exemple la charge d'un processeur, le niveau de remplissage d'une mémoire, l'ampérage de sortie d'une alimentation, la sollicitation de moyens mécaniques, etc. On définit alors des valeurs seuils à partir desquels un message d'état est émis. Il sélectionne les informations utiles, par exemple en fonction des valeurs mesurées et des valeurs seuils définies, et les met ensuite en forme dans un format commun au domaine 106 considéré, avant transmission au concentrateur d'information 112.

Un unique module concentrateur 112 par domaine 106 reçoit ainsi et collecte les informations émanant des différents agents 108, 110 présents dans le même domaine.

L'ensemble de ces informations est traité, par exemple selon des règles préétablies pour traduire les informations reçues de granularité fine et les formater si nécessaire pour un envoi vers les bus de données avioniques 40, 50. Il fournit ainsi un rapport d'état soit de l'équipement concerné 102, 104, soit de l'ensemble du domaine 106.

Ce rapport, s'il concerne l'activité de l'équipement, est transmis sur le réseau dédié 50 par une interface de communication appropriée 114, à destination du système de reconfiguration 20 et plus précisément d'un module de collecte 202 tel qu'explicité ci-après. On utilise dans ce cas un format commun à l'ensemble des domaine 106 et compatible avec le système 20 et le module de collecte 202.

S'il s'agit en revanche d'un rapport sur la santé de l'équipement, celui-ci est transmis à un module de test intégré 116 (ou module BiTE comme introduit précédemment) propre au domaine 106 et qui peut communiquer avec le CMS 34.

Ce module BiTE 116, via des tests menés (parfois sur instruction du module CMS 34) ou les rapports de santé reçus, détecte les fautes de fonctionnement des équipements dans le domaine, les isole et les vérifie. Il transmet ensuite, au travers du réseau avion 40, à destination du module CMS 34 et/ou directement du module de collecte 202 précité, un message de l'état de santé soit du domaine 106 soit de l'équipement 102, 104 considéré. Le module BiTE 116 centralise ainsi, pour chaque domaine, les fautes propres à chaque équipement (fonction, hardware...).

Comme on le verra par la suite, ces messages d'état santé/activité reçus par le système de reconfiguration 20 conduisent ce dernier à générer, sur le réseau dédié 50, des commandes de reconfiguration des équipements 104, toutes les commandes étant selon un même format de communication indépendant des équipements reconfigurables 104.

Concernant l'exécution de commandes de reconfiguration transmises par le système de reconfiguration 20 sur le réseau dédié 50, celles-ci sont reçus, via une interface de communication 118, par un module de pilotage 120 prévu dans chaque domaine 106 pour piloter la reconfiguration de chacun des équipements reconfigurables 104 de celui-ci. Le module de pilotage 120 dispose d'une table de conversion associant une action demandée par le système de configuration 20 à un ensemble de processus permettant la reconfiguration effective des équipements au sein du domaine 106 qu'il représente.

Après détermination de ces processus de reconfiguration locale, le module de pilotage 120 envoie des messages de reconfiguration, comprenant des données de mise en oeuvre des actions de reconfiguration, à l'ensemble des équipements reconfigurables 104 concernés. Les équipements concernés sont ceux qui sont visés dans la commande de reconfiguration transmise par le système 20 ou ceux visés dans les tables de conversion.

Chaque équipement reconfigurable 104 comprend également d'un agent de reconfiguration 122 qui reçoit les messages de reconfiguration du module 120 et qui les traduit en signaux ou actions de commande spécifiques à l'équipement (logiciel ou matériel) à reconfigurer.

A réception de ces commandes spécifiques, une reconfiguration classique locale est menée au sein de chaque équipement 104 visé.

On note ici que les agents de surveillance 102, 104 vont détecter le changement d'état de l'équipement suite à l'exécution des signaux de commande. Des messages associés rapportant la reconfiguration réalisée (rapports de reconfiguration) sont alors émis, sur le réseau dédié 50, à destination du concentrateur 112 comme décrit ci-dessus, puis relayés vers le système de gestion de reconfiguration 20.

Toujours en référence à la **figure 2**, le système de gestion de reconfiguration 20 commun à l'ensemble des domaines 106 de l'avion comprend, comme indiqué ci-dessus, un module de collecte 202 connecté à la fois au réseau avion 40 et au réseau dédié 50. Etant le point d'entrée du système de reconfiguration 20, une exigence de sécurité du module de collecte est recherchée. Ainsi, on valide le logiciel de collecte 202 par une analyse de sécurité de sa fonction (FHA pour "*Fonctional Hazardous Analysis*") pour déterminer un niveau de criticité de ce logiciel (niveau DAL pour *"Design Assurance Level*") suffisant, par exemple le niveau E selon la norme DO-178B, et on utilise des éléments de redondance pour les communications.

Le module de collecte 202 reçoit donc, par l'interface 204 sur le réseau 40 :
- depuis le module CMS 34 ou les modules BiTE 116 des domaines 106, l'état de santé des différents équipements intervenant dans la prise de décision de reconfiguration, et notamment des rapports de reconfiguration d'un équipement 102, 106 du domaine 106 concerné (dans le cas des modules BiTE) ;
- depuis le module de suivi de vol 36, une indication de la phase de vol courante de l'avion ;
- depuis le terminal de maintenance 38, une commande du mode de reconfiguration souhaité par un opérateur. A titre d'exemple, cette commande peut être un retour à la configuration dite "usine", une demande d'exécution d'une reconfiguration particulière, par exemple de test, ou une interdiction de reconfiguration jusqu'à nouvel ordre.

En parallèle, il peut également recevoir du module de configuration 32 des commandes de mise à jour ou de configuration des composants du système de reconfiguration 20.

Le module de collecte 202 reçoit, en permanence par l'interface 206 sur le réseau 50, les informations sur les performances et activités des équipements 102, 104 situés dans un domaine 106 (messages d'état d'activité).

Une fois les informations collectées de ces différentes sources, le module 202 identifie l'émetteur de chaque message reçu afin de savoir si celui-ci peut être transmis. En effet, les messages de certaines sources peuvent ne pas être pris en compte.

Un rôle parallèle du module de collecte 202 est de déterminer, en l'absence d'information prolongée, si celle-ci résulte de l'absence d'information pertinente d'état qui conduit à l'absence d'envoi d'information jusqu'à l'existence d'une nouvelle information utile, ou si celle-ci résulte d'une défaillance d'un des modules communicant avec lui. Par exemple, le module 202 surveille les trames et le signal au niveau de l'interface 204. Ainsi, il peut repérer les coupures de ligne (pas de signal) ou l'absence d'information (signal présent mais donnée vide).

Dans le dernier cas (défaillance), le module de collecte 202 peut considérer disposer d'un message d'état de santé ("état défaillant") du module communiquant avec lui, et une action de reconfiguration du module défaillant peut être entreprise comme décrite par la suite. En outre, le résultat de cette détermination peut être pris en compte dans la décision des actions de reconfiguration des différents domaines (autre que le module défaillant).

Les informations ainsi récupérées et éventuellement extraites d'un format de communication sur le réseau sont alors transmises à un module d'analyse 208. Néanmoins, les informations en provenance du module de configuration avion 32 sont aiguillées vers une fonction de mise à jour (non représentée) du système de reconfiguration 20.

L'analyseur 208 décode chaque information transmise par le module 202, puis détermine si cette information vient notifier une modification de l'état d'un équipement 102, 104 situé dans le champ d'action pour la reconfiguration 10 ou si cette information est susceptible de modifier le fonctionnement du système de reconfiguration 20, par exemple modification des phases de vol, nouvelle commande de mode de reconfiguration depuis le terminal 38.

Selon les informations reçues, l'analyseur 208 mémorise l'état de l'avion dans la base de données "statut avion" 210 (par exemple la phase de vol, ...), mémorise, dans la base de données "statut domaines" 212, le nouvel état des équipements 102, 104. Il notifie enfin le module suivant 214, dit module de décision, qu'un nouvel évènement a eu lieu et doit être pris en considération.

Le module 214 est au coeur du système de reconfiguration 20 car c'est lui qui mène la détermination des actions de reconfiguration à entreprendre. Cette détermination n'est pas particulièrement déterministe mais doit certifier que deux situations similaires engendreront deux actions identiques. Ainsi, il est possible de faire appel à des tables de conversion (modèles) associant des actions prédéfinies à des scénarios/conditions connu(e)s, faire appel à des systèmes plus complexes permettant de tenir compte de nouvelles situations non prévues, par exemple des réseaux de neurones recevant en entrée l'état des domaines 106 et autres informations des systèmes 30.

A la réception d'une notification, le module décisionnel 214 accède aux bases de données 210 et 212 pour récupérer l'état général de l'avion et les états des équipements, afin de statuer sur l'utilité et la capacité de reconfiguration d'équipements 102, 104. A cet effet, il vérifie que les différents états correspondent à au moins un modèle en mémoire, c'est-à-dire des configurations autorisés préalablement définis.

Si la reconfiguration est jugée utile, le module décisionnel 214 choisit la reconfiguration la plus adaptée parmi l'ensemble des possibilités de reconfigurations qui lui sont offertes. Pour ce faire, on calcule une priorité pour chaque modèle possible. Les priorités sont gérées par les modèles qui prennent en compte, en entrées, un certain nombre de critères. Ce sont ces critères qui permettent de définir les priorités.

En variante, la gestion des priorités peut aussi passer par un algorithme de gestion mis en oeuvre dans le module de décision.

Lorsqu'une reconfiguration est sélectionnée, le module de décision 214 adresse, aux domaines 106 visés, les informations nécessaires à la reconfiguration de leurs équipements 102, 104. Il transmet ainsi, au(x) module(s) de pilotage 120 visé(s), une commande de reconfiguration contenant un identifiant d'action à mettre en place et éventuellement les équipements concernés par cette reconfiguration.

En variante, cette commande peut être du type arrêt d'une reconfiguration, par exemple si un opérateur demande la cessation de toute reconfiguration au travers du terminal 38 ou si l'avion vient de passer dans une phase de vol qui interdit la reconfiguration.

Enfin, on a représenté, sur la **figure 2**, un module BiTE 216 équipant le système de reconfiguration 20. Ce module de test et de surveillance opère de façon similaire aux modules BiTE 116 de sorte à informer, via le réseau 40, le module central de surveillance CMS 34 de l'état des différents composants du système de reconfiguration 20.

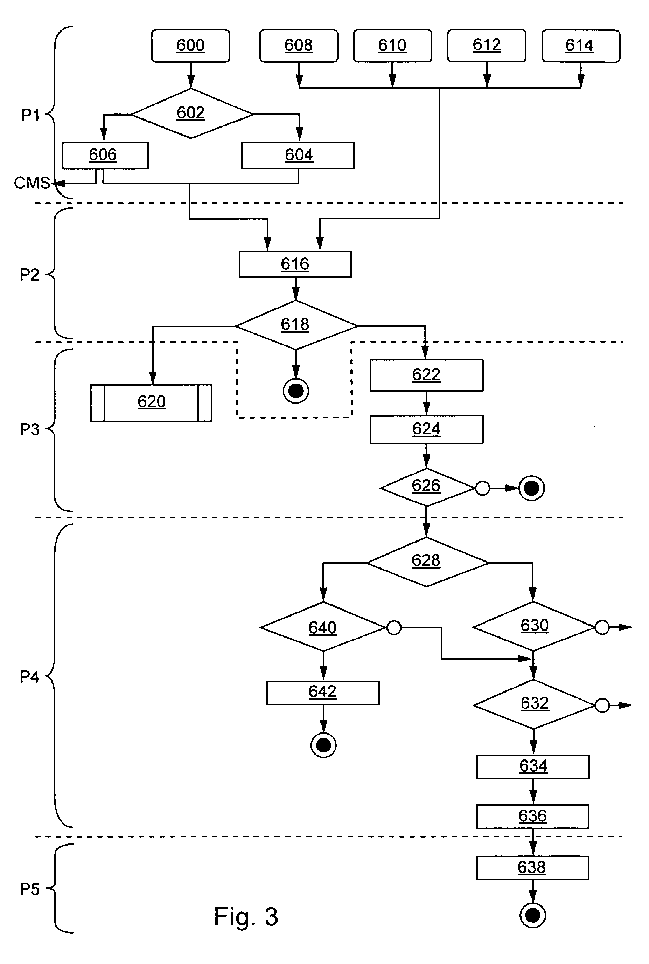

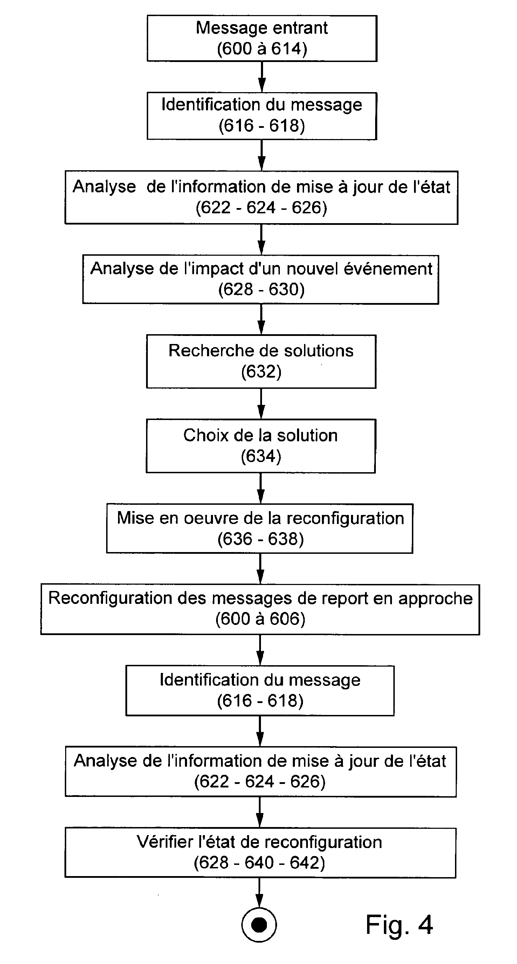

On a représenté, sur les **figures 3** et **4**, un exemple de procédure de reconfiguration classique pour un système selon l'invention.

Lors d'une première phase P1 de génération de messages d'état d'équipements 102, 104 ou systèmes 30, des informations d'état d'activité ou de santé sont émis, à l'étape 600, par les différents équipements d'un domaine 106.

A l'étape 602, le concentrateur 112 détermine le type d'informations reçues : santé ou activité.

En cas d'informations de type état d'activité, celles-ci sont transmises sur le réseau dédié de reconfiguration 50 lors de l'étape 604, alors que les informations d'état de santé sont transmises sur le réseau avion 40 lors de l'étape 606.

En parallèle, les informations issues du module de configuration avion 32, du module CMS 34, du module de suivi de vol 36 et du terminal de maintenance 38 sont transmises sur le réseau avion 40 aux étapes, respectivement, 608, 610, 612 et 614.

Lors d'une deuxième phase P2 de collecte, le module de collecte 202 récupère en mémoire tampon les informations envoyées précédemment sur les réseaux 40 et 50, lors de l'étape 616. Puis, à l'étape 618, ce même module de collecte 202 détermine la nature des données reçues.

On passe alors à une troisième phase P3 d'analyse.

En cas de donnée relative à la configuration du système 20, celles-ci sont transmises, à l'étape 620, à des modules de configuration afin de mettre à jour le système 20 en conséquence: par exemple ajout d'un nouveau domaine 106 ou d'un nouvel équipement 102, 104 dans un domaine, définition de nouvelles actions de reconfiguration, etc.

En cas d'information relative à l'état général de l'avion ou particulier d'un équipement 102, 104, le module d'analyse 208 détermine, à l'étape 622, l'équipement concerné par l'information reçue.

Ce module 208 récupère ainsi, dans les bases 210 et 212, lors de l'étape 624, l'état précédent de l'équipement concerné, que le module 208 compare ensuite, à l'étape 626, avec l'information reçue et traitée.

En cas d'état identique, le traitement se termine.

En cas d'états différents, c'est-à-dire qu'au moins un équipement a évolué dans l'avion, on passe à une quatrième phase de décision P4 comprenant dans une étape 628 la détermination du type d'information reçue.

Il s'agit généralement en premier lieu d'une information révélant un état modifié. Dans ce cas, le module décisionnel 214 détermine si des actions doivent être entreprises à l'étape 630. Le processus se termine si aucune action ne doit être menée, et se poursuit à l'étape 632 en cas d'actions à mener, en déterminant si ces actions déterminées sont disponibles, c'est-à-dire compatibles avec les critères ou états d'entrée des modèles d'actions/scénarios.

Dans l'affirmative, le module de décision 214 procède, lors de l'étape 634, au choix de l'action la plus pertinente en fonction de critères de choix préétablis. Ce peut être des critères garantissant la qualité de service, par exemple substituer une unité CPU en panne, palier au manque de ressources mémoire, etc.

L'action choisie est alors stockée en mémoire et transmise sur le réseau dédié 50 à destination d'un ou plusieurs modules de pilotage 120, lors de l'étape 636.

Puis à l'étape 638 d'une cinquième phase d'action P5, l'action choisie est traitée par le module de pilotage 120 pour envoyer des instructions de reconfiguration spécifiques à chacun des équipements 104 concernés. Le traitement prend alors fin par la reconfiguration effective locale de ces équipements 104.

Si l'information analysée à l'étape 628 est du type rapport d'action, c'est-à-dire un message rapportant une reconfiguration réalisée, le module de décision 214 détermine, à l'étape 640, si l'action effectivement menée est en rapport avec celle prescrite, c'est-à-dire enregistrée lors de l'étape 636.

Dans l'affirmative, on passe à l'étape 642 consistant à enregistrer, dans la base de donnée 212, les nouveaux état et configuration de l'équipement reconfiguré (afin d'être disponibles pour les futures itérations des étapes 624, 626). Le traitement prend alors fin.

Dans la négative, le processus se poursuit à l'étape 632 de sorte à commander une nouvelle reconfiguration de l'équipement visé.

La **figure 4** récapitule l'ensemble des étapes liées à une reconfiguration. On observe initialement la tenue des différentes étapes décrites ci-dessus (à l'exception de l'étape 620) jusqu'à la réalisation de la reconfiguration à l'étape 628.

Comme indiqué précédemment, cette reconfiguration entraîne une changement d'état de l'équipement 102, 104 concerné et donc la transmission d'un message, ici un rapport de reconfiguration, au module de collecte 202 (étape 600 à nouveau). Les étapes 602, 604 ou 606, 616, 618, 622, 624, 626, et 628 sont alors menées comme détaillée ci-dessus.

S'agissant d'un rapport de reconfiguration, le processus se poursuit à l'étape 640 puis éventuellement à l'étape 642 de sorte à valider la reconfiguration menée.

On observe ainsi que pour réaliser une reconfiguration complète, on met en oeuvre deux fois l'algorithme représenté sur la **figure 3** afin de mener la reconfiguration dans un premier temps, puis de vérifier la réalisation de celle-ci dans un deuxième temps.

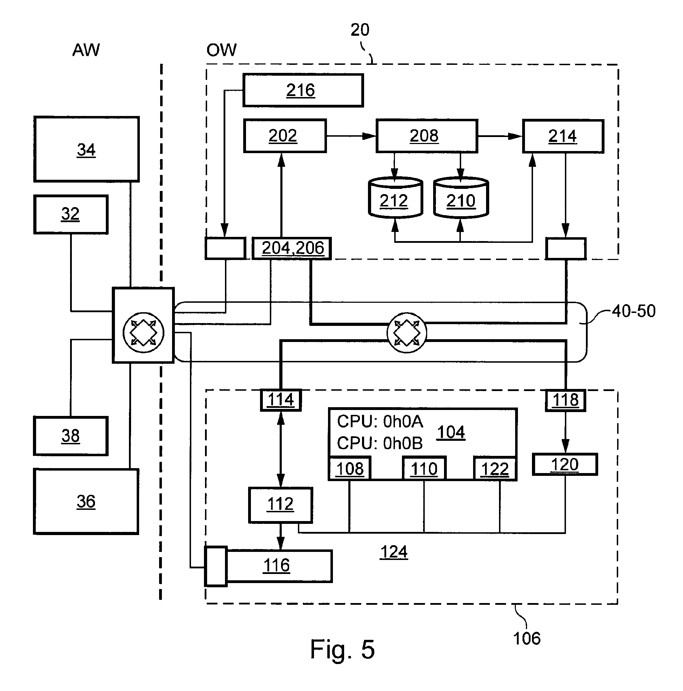

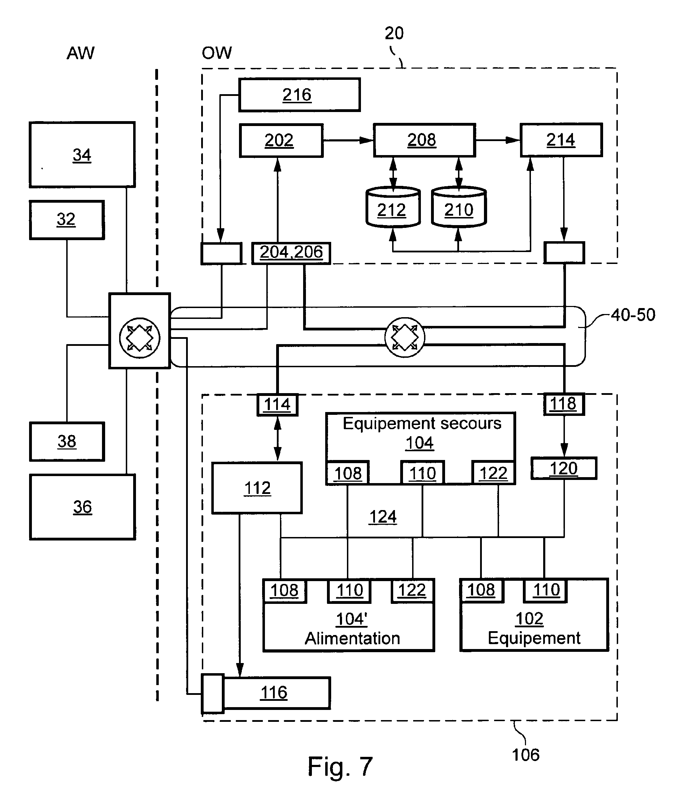

Les **figures 5** et **7** représentent deux exemples du système de la **figure 2**, appliqués respectivement à l'allocation d'un microprocesseur CPU ("*central processing unit*") et à la reconfiguration d'un équipement de secours partagé. Les deux exemples mettent en oeuvre le même centre de gestion de reconfiguration 20, opérant par exemple à des instants différents.

Les deux systèmes présentent un unique réseau physique supportant les deux réseaux 40 et 50. Les modules et systèmes de la **figure 2** sont repris dans ces figures avec des numéros de référence similaires.

Sur la **figure 5**, le domaine 106 comprend un uniquement équipement reconfigurable 104 de type CPU disposant de deux plages d'adresses 0h0A et 0h0B attribuables dynamiquement grâce à l'invention. On recherche dans ce cas à optimiser les performances de ce microprocesseur 104.

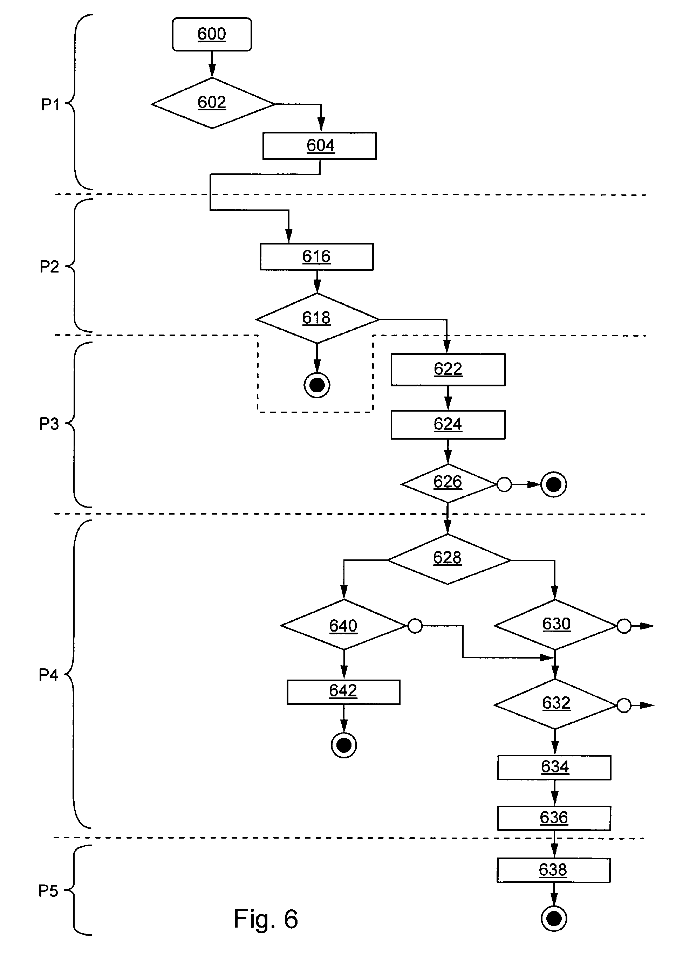

La **figure 6** représente l'exécution de l'invention dans le cas du CPU de la **figure 5**.

L'allocation de CPU est ici réalisée sur la base d'une analyse de performance, c'est-à-dire d'activité. Un état de performance est ainsi transmis sur le réseau dédié 50 (étapes 600, 602 et 604).

Le système de reconfiguration mène alors une analyse comme décrite ci-dessus. Si une optimisation des performances est possible (déterminée par le module de décision 214), le système de reconfiguration modifie l'allocation de façon dynamique de sorte à toujours maximiser l'efficacité du CPU, par exemple en attribuant les deux adresses CPU à une même application logicielle.

Sur la **figure 7**, le domaine 106 comprend un équipement non reconfigurable 102 qui tombe en panne, un équipement d'alimentation reconfigurable 104 et un équipement de secours reconfigurable 104'.

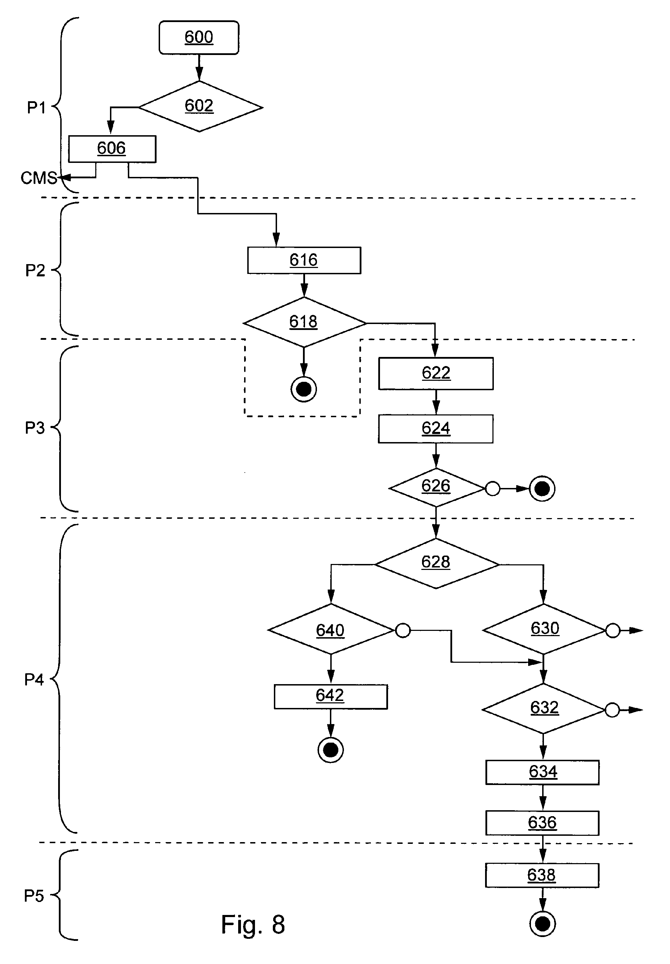

Comme illustré sur la **figure 8** qui représente les différentes étapes de la **figure 3** appliquées au cas de la **figure 7**, la reconfiguration d'un équipement de secours 104' est effectuée sur la base d'une analyse d'état de santé. Les messages d'état sont transmis, via un bus 124 interne au domaine 106, jusqu'au concentrateur 112. Une mise en oeuvre aisée s'appuie sur un bus interne 124 de type informatique.

Ainsi un message d'état de santé défaillant de l'équipement 102 est transmis (étape 600) par le module BiTE 116 sur le réseau avion 40 à destination du module CMS 34 et/ou du système de reconfiguration 20 (étapes 602 et 606).

Les étapes suivantes sont identiques à celles des **figures 3** et **6**. Les commandes de reconfiguration sont transmises, via le bus interne 124, depuis le module de pilotage 120 jusqu'aux équipements 104 et leurs agents de reconfiguration 122.

Les exemples qui précèdent ne sont que des modes de réalisation de l'invention qui ne s'y limite pas.

Ainsi, même si l'on envisage la reconfiguration des équipements d'un système ouvert (OW pour "*Open World*" sur les **figures 5** et **7**), elle peut être menée sur des équipements de systèmes fermés (tels l'environnement fermé de l'avion AW). Dans ce cas, pour garantir une haute sécurité et compatibilité avec des processus de certification, des étapes supplémentaires de vérifications de compatibilité des commandes de reconfiguration seront conduites.

## Revendications

1. Système aéronautique embarqué comprenant une pluralité d'équipements hétérogènes (102, 104) communiquant selon des protocoles ou formats distincts et aptes à traiter des commandes pour le fonctionnement de l'aéronef, une partie au moins desdits équipements étant reconfigurable,
**caractérisé en ce qu'**il comprend un centre de gestion de reconfiguration (20) agencé pour recevoir (616) des messages d'état de ladite pluralité d'équipements et pour émettre (638) des messages de reconfiguration à destination desdits équipements reconfigurables (104) en fonction de plusieurs messages d'état reçus,
- lesdits équipements hétérogènes (102, 104) embarquent des moyens de surveillance (108, 110) aptes à émettre lesdits messages d'état selon un même format, et
- les équipements reconfigurables (104) embarquant des moyens de reconfiguration (122) aptes à traiter au moins un desdits messages de reconfiguration de sorte à reconfigurer ledit équipement associé.

2. Système selon la revendication précédente, comprenant :
- un réseau de communication (40) embarqué dans l'aéronef pour connecter le centre de reconfiguration (20), ladite pluralité d'équipements hétérogènes (102, 104) et d'autres systèmes (30, 32, 34, 36, 38) embarqués dans l'aéronef,
- un réseau distinct dédié (50) pour la reconfiguration véhiculant des messages d'état et lesdits messages de reconfiguration entre le centre de reconfiguration (20) et ladite pluralité d'équipements hétérogènes (102, 104).

3. Système selon la revendication 2, dans lequel lesdits réseau de communication et réseau dédié sont supportés par deux réseaux physiques distincts.

4. Système selon la revendication 2, dans lequel lesdits réseau de communication et réseau dédié sont deux réseaux virtuels supportés par un même réseau physique.

5. Système selon l'une des revendications précédentes, dans lequel ladite pluralité d'équipements hétérogènes (102, 104) est regroupée en une pluralité d'ensembles cohérents (106) d'équipements, chaque ensemble cohérent (106) comprenant un moyen (112) concentrant l'ensemble des messages d'état émis par les équipements (102, 104) de l'ensemble cohérent (106) et générant un message d'état général à destination dudit centre de reconfiguration (20).

6. Système selon la revendication précédente prise en dépendance de la revendication 2, dans lequel ledit moyen de concentration (112) émet, sur ledit réseau dédié (50), des messages relatifs à l'état d'activité desdits équipements (102, 104) de l'ensemble cohérent (106) et, sur ledit réseau de communication embarqué (40), des messages relatifs à l'état de santé desdits mêmes équipements (102, 104).

7. Système selon la revendication 5 ou 6, dans lequel chaque ensemble cohérent (106) comprend un moyen de pilotage (120) apte à traiter un message de reconfiguration émis par le centre de reconfiguration (20) de sorte à piloter chacun desdits équipements reconfigurables (104) de l'ensemble (106), au travers desdits moyens de reconfiguration embarqués (122).

8. Système selon l'une quelconque des revendications précédentes, dans lequel ledit centre de reconfiguration (20) est agencé pour traiter ensemble lesdits messages d'état et des messages émis par d'autres systèmes embarqués (30, 32, 34, 36, 38).

9. Procédé de reconfiguration d'un système aéronautique embarqué comprenant une pluralité d'équipements hétérogènes (102, 104) communiquant selon des protocoles ou formats distincts et aptes à traiter des commandes pour le fonctionnement de l'aéronef, une partie au moins desdits équipements étant reconfigurable,
**caractérisé en ce qu'**il comprend les étapes suivantes :
- la réception (616), par un centre de gestion de reconfiguration (20), d'une pluralité de messages d'état de ladite pluralité d'équipements (102, 104);
- l'émission (638), par le même centre de reconfiguration (20), de messages de reconfiguration à destination desdits équipements reconfigurables (104) en fonction de plusieurs messages d'état reçus,
procédé dans lequel lesdits messages d'état sont émis, selon un même format, par des moyens de surveillance (108, 110) embarqués dans chacun desdits équipements (102, 104),
et les équipements reconfigurables (104) embarquent chacun des moyens de reconfiguration (122) aptes à traiter au moins un desdits messages de reconfiguration de sorte à reconfigurer ledit équipement associé.

10. Procédé selon la revendication précédente, dans lequel des messages d'état d'activité des équipements et les messages de reconfiguration sont transmis sur un réseau dédié à la reconfiguration et des messages d'état de santé des équipements sont transmis sur un réseau de communication embarqué distinct de l'aéronef.

11. Procédé selon la revendication 9 ou 10, dans lequel ledit centre de reconfiguration (20) collecte (616) les messages reçus au travers des deux réseaux distincts (40, 50), détermine (618, 622, 626) l'impact desdits messages d'état sur l'état d'au moins un équipement reconfigurable (104) et génère (638), le cas échéant, un desdits messages de reconfiguration à destination d'au moins ledit équipement reconfigurable.

12. Procédé selon l'une des revendications 9 à 11, dans lequel la reconfiguration effective d'un équipement reconfigurable (104) engendre la transmission (604, 606), par ledit moyen de surveillance (108, 110) de l'équipement reconfiguré (104), d'au moins un message d'état au centre de reconfiguration (20) de sorte que ce dernier mène une vérification (640, 642) de ladite reconfiguration.

13. Aéronef comprenant un système aéronautique embarqué selon l'une quelconque des revendications 1 à 8.
